# EUROPÄISCHE PATENTANMELDUNG

(11) **EP 3 235 767 A1**
(43) Veröffentlichungstag der Anmeldung: **25.10.2017**
(21) Anmeldenummer: 17159326.2
(22) Anmeldetag: 06.03.2017
(51) Int. Cl.: B65G 53/42, A24C 5/32, A24C 5/35, A24C 5/47, B23P 19/00, B65G 51/02

(54) **FÖRDERDÜSE SOWIE FÖRDERVORRICHTUNG MIT MINDESTENS EINER FÖRDERDÜSE**

(30) Priorität: 18.04.2016 DE 102016107125
(71) Anmelder: Hauni Maschinenbau GmbH, 21033 Hamburg (DE)
(72) Erfinder: Hofmann, Nils, 21029 Hamburg (DE); Haag, Martin, 22309 Hamburg (DE)
(74) Vertreter: Eisenführ Speiser

(57) **Zusammenfassung**

Eine Förderdüse zum Transport von für die Herstellung von Produkten der Tabak verarbeitenden Industrie zu verwendenden diskreten Objekten, mit einem Förderkanal (4), der eine Förderkanalwandung (6), einen Förderkanaleinlass (4a) und einen Förderkanalauslass (4b) aufweist und zum Transport der Objekte in Transportrichtung (A) vom Förderkanaleinlass (4a) zum Förderkanalauslass (4b) ausgebildet ist, und mit einer Fluidzuführungseinrichtung (10), die zum Zuführen von gasförmigem Fluid, insbesondere Luft, unter Druck in den Förderkanal (4) ausgebildet ist, wobei die Förderkanalwandung (6) eine kontinuierlich durchlaufenden und keine Unstetigkeitsstellen enthaltende Innenseite (6a) aufweist, und wobei die Fluidzuführungseinrichtung (10) mindestens ein Fluidauslassmittel (16, 18) aufweist, das zur Abgabe des Fluids in den Förderkanal (4) ausgebildet, unter einem Winkel (α) von kleiner als 90° zur Transportrichtung (A) in der Förderkanalwandung (6) angeordnet und dabei in Richtung des Förderkanalauslasses (4b) orientiert ist.

## Beschreibung

Die Erfindung betrifft eine Förderdüse zum Transport von für die Herstellung von Produkten der Tabak verarbeitenden Industrie zu verwendenden Objekten, mit einem Förderkanal, der eine Förderkanalwandung, einen Förderkanaleinlass und einen Förderkanalauslass aufweist und zum Transport der Objekte in Transportrichtung vom Förderkanaleinlass zum Förderkanalauslass ausgebildet ist, und mit einer Fluidzuführungseinrichtung, die zum Zuführen von gasförmigem Fluid, insbesondere Luft, unter Druck in den Förderkanal ausgebildet ist.

Es ist eine Aufgabe der vorliegenden Erfindung, für eine Förderdüse der eingangs genannten Art eine Konstruktion vorzuschlagen, die sich besonders vorteilhaft für den Transport von einen im Wesentlichen druckunempfindlichen Körper aufweisenden diskreten Objekten eignet.

Vorgeschlagen wird zur Lösung der Aufgabe eine Förderdüse zum Transport von für die Herstellung von Produkten der Tabak verarbeitenden Industrie zu verwendenden diskreten Objekten, mit einem Förderkanal, der eine Förderkanalwandung, einen Förderkanaleinlass und einen Förderkanalauslass aufweist und zum Transport der Objekte in Transportrichtung vom Förderkanaleinlass zum Förderkanalauslass ausgebildet ist, und mit einer Fluidzuführungseinrichtung, die zum Zuführen von gasförmigem Fluid, insbesondere Luft, unter Druck in den Förderkanal ausgebildet ist, wobei die Förderkanalwandung eine kontinuierlich durchlaufenden und keine Unstetigkeitsstellen enthaltende Innenseite aufweist, und wobei die Fluidzuführungseinrichtung mindestens ein Fluidauslassmittel aufweist, das zur Abgabe des Fluids in den Förderkanal ausgebildet, unter einem Winkel von kleiner als 90° zur Transportrichtung in der Förderkanalwandung angeordnet und dabei in Richtung des Förderkanalauslasses orientiert ist.

Die erfindungsgemäße Düse ermöglicht den Transport von einzelnen diskreten Objekten hintereinander und orientierungstreu mithilfe eines unter Druck stehenden gasförmigen Fluids wie insbesondere Luft entlang einer Förderstrecke, an die die Förderdüse mit ihrem Förderkanal stromaufwärts angeschlossen oder in die die Förderdüse mit ihrem Förderkanal integriert ist und die von einem Kanal, einem Rohr, einem Schlauch o. dgl. gebildet werden kann. Dabei kann die Fördergeschwindigkeit über den Druck und die Menge des zugeführten Fluids eingestellt werden kann. Die Förderstrecke kann mehrere Meter betragen.

Die erfindungsgemäße Düsengeometrie ist insbesondere für den Transport von Objekten vorgesehen, die nicht nur diskret, sondern auch relativ kurz sind, also eine geringe Länge im Verhältnis zu ihrer Breite besitzen, ohne dass diese innerhalb des Förderkanals der erfindungsgemäßen Förderdüse an Störkanten o. dgl. Hindernissen hängen bleiben oder abgebremst werden. Desweiteren ist die erfindungsgemäße Düsengeometrie insbesondere für den Transport von diskreten Objekten vorgesehen, die eine Flüssigkeit und/oder mindestens ein Festkörper oder ein Festkörpergranulat enthalten. Ferner ist die erfindungsgemäße Düsengeometrie insbesondere auch für den Transport von diskreten Objekten vorgesehen, die eine im Wesentlichen glatte Außenhaut aufweisen. Außerdem ist die erfindungsgemäße Düsengeometrie insbesondere für den Transport von diskreten Objekten vorgesehen, deren Körper zumindest im unbelasteten Zustand im Wesentlichen seine Form behält, wobei grundsätzlich für den Transport ebenfalls diskrete Objekte in Frage kommen können, deren Körper auch unter Einwirkung eines bestimmten Druckes seine Form im Wesentlichen behält oder im Wesentlichen druckunempfindlich ist. Deshalb eignet sich die erfindungsgemäße Konstruktion insbesondere für den Transport von Wasserkapseln für den sog. "Splash"-Multifilter, welche von einer Vereinzelungsstation zu einer Filterherstellungsmaschine zu transportieren sind. Derartige Wasserkapseln werden für bestimmte Filterzigaretten während der Herstellung in den Filter eingesetzt und sind so beschaffen, dass sie bei Beaufschlagung mit mechanischem Druck, sofern dieser einen bestimmten Mindestwert überschreitet, Wasser abgeben.

Für einen reibungslosen Transport derartiger diskreter Objekte trägt erfindungsgemäß nicht nur die Ausbildung einer kontinuierlich durchlaufenden und keine Unstetigkeitsstellen aufweisenden Innenseite bzw. -fläche der Förderkanalwandung bei, sondern auch eine gegenüber der Transportrichtung und somit der Längserstreckung des Förderkanals schräge Anordnung der Fluidauslassmittel der Fluidzuführungseinrichtung in Transportrichtung, so dass das gasförmige Fluid in den Förderkanal etwa in Transportrichtung ausgestoßen wird, um die zu transportierenden Objekte wirksam zu beaufschlagen und zu beschleunigen.

Bevorzugte Ausführungen und Weiterbildungen der Erfindung sind in den abhängigen Ansprüchen angegeben.

Bevorzugt weist das mindestens eine Fluidauslassmittel der Fluidzuführungseinrichtung einen Kanal und einen Öffnungsbereich auf, der mit dem Kanal verbunden ist und eine in der Innenseite der Förderkanalwandung ausgebildete Auslassöffnung aufweist. Durch die Verwendung eines Kanals lässt sich das gasförmige Fluid gezielt in den Förderkanal einbringen, während der nachgeschaltete Öffnungsbereich für eine Entspannung des Fluiddruckes sorgt, was für einen schonenden Transport der Objekte von Vorteil ist. Hierzu ist bevorzugt die Breite des Öffnungsbereiches größer als die Breite des Kanals.

Bei einer Weiterbildung weist die Auslassöffnung einen stromaufwärts gelegenen, zum Förderkanaleinlass weisenden ersten Randabschnitt, der nach Art einer Fase unter einem Winkel von kleiner als 90° zur Transportrichtung angeordnet und in Richtung des Förderkanaleinlasses orientiert ist, und einen vom ersten Randabschnitt stromabwärts gelegenen, zum Förderkanalauslass weisenden zweiten Randabschnitt auf, der nach Art einer Fase unter einem Winkel von kleiner als 90° zur Transportrichtung angeordnet und dabei in Richtung des Förderkanalauslasses orientiert ist. Die fasenförmige Ausbildung der genannten Randabschnitte der Öffnung trägt des Weiteren vorteilhaft dazu bei, die Bildung von Störkanten zu verhindern.

Bei einer weiteren bevorzugten Ausführung der Erfindung weist die Fluidzuführungseinrichtung einen Fluidanschluss, eine mit dem Fluidanschluss verbundene Fluidkammer, die den Förderkanal an oder in der Förderkanalwandung im Wesentlichen umgibt, und mehrere Fluidauslassmittel auf, die um den Förderkanal herum verteilt angeordnet und gemeinsam mit der Fluidkammer verbunden sind. Durch die Verwendung einer derartigen Fluidkammer lässt sich das gasförmige Fluid besonders wirkungsvoll auf sämtliche Fluidauslassmittel verteilen, wobei deren verteilte Anordnung um den Förderkanal herum in vorteilhafter Weise für eine gleichmäßige Beaufschlagung der zu transportierenden Objekte sorgt.

Bei einer Weiterbildung dieser Ausführung liegen die Auslassöffnungen quer zur Transportrichtung nebeneinander und sind durch sich in Transportrichtung erstreckende, vorzugsweise stegartige, Abschnitte voneinander getrennt, welche jeweils einen Bestandteil der Förderkanalwandung bilden und deren Außen- bzw. Oberfläche mit der Fläche der übrigen Innenseite der Förderkanalwandung fluchtet. Demnach sind bei dieser Weiterbildung die Auslassöffnungen der Fluidauslassmittel zwischen, vorzugsweise stegartigen, Abschnitten der Förderkanalwandung angeordnet, welche sich in Transportrichtung erstrecken und mit der Fläche der übrigen Innenseite bzw. -fläche der Förderkanalwandung fluchten, wodurch sie für eine gute und reibungslose Führung der zu transportierenden Objekte ohne störende Kanten sorgen.

Bei einer weiteren besonders bevorzugten Ausführung ist eine Fluidabführungseinrichtung vorgesehen, die zum Abführen von gasförmigem Fluid, insbesondere Luft, aus dem Förderkanal ausgebildet ist und mindestens ein Fluideinlassmittel aufweist, das zur Aufnahme von Fluid aus dem Förderkanal ausgebildet, in der Förderkanalwandung unter einem Winkel von kleiner als 90° zur Transportrichtung angeordnet und in Richtung des Förderkanaleinlasses orientiert ist. Auf diese Weise lässt sich eine nicht unerhebliche Menge des eingebrachten gasförmigen Fluides im Wesentlichen unmittelbar nach Eintritt durch die Fluidzuführungseinrichtung wieder aus dem Förderkanal ausschleusen. Dadurch können die Objekte am Ende der Förderstrecke bei Bedarf problemlos aufgestaut werden, da dort eine Abfuhr des gasförmigen Fluides nicht mehr vonnöten ist, denn diese wird ja bereits stromaufwärts innerhalb der erfindungsgemäßen Förderdüse durch die Fluidabführungseinrichtung bewirkt.

Bevorzugt entspricht der Abstand zwischen den Fluideinlassmitteln der Fluidabführungseinrichtung und den Fluidauslassmitteln der Fluidzusammenführungseinrichtung etwa der Breite des Förderkanals.

Vorzugsweise weist das mindestens eine Fluideinlassmittel der Fluidabführungseinrichtung einen Kanal mit einer in der Förderkanalwandung ausgebildeten Einlassöffnung auf. Bei einer Weiterbildung weist diese Einlassöffnung einen stromaufwärts gelegenen, zum Förderkanaleinlass weisenden ersten Randabschnitt, der nach Art einer Fase unter einem Winkel von kleiner als 90° zur Transportrichtung angeordnet und in Richtung des Förderkanaleinlasses orientiert ist, und einen vom ersten Randabschnitt stromabwärts gelegenen, in Richtung auf den Förderkanalauslass weisenden zweiten Randabschnitt auf, der nach Art einer Fase unter einem Winkel von kleiner als 90° zur Transportrichtung angeordnet und dabei in Richtung des Förderkanalauslasses orientiert ist. Auch diese Konstruktion trägt dazu vorteilhaft bei, die Bildung von Störkanten im Förderkanal zu verhindern.

Für eine besonders effektive Ableitung des gasförmigen Fluides aus dem Förderkanal weist die Fluidabführungseinrichtung mehrere Fluideinlassmittel auf, die an oder in der Förderkanalwandung um den Förderkanal herum angeordnet sind. Bei einer Weiterbildung dieser Ausführung liegen die Einlassöffnungen quer zur Transportrichtung nebeneinander und sind durch sich in Transportrichtung erstreckende, vorzugsweise stegartige, Abschnitte voneinander getrennt, welche jeweils einen Bestandteil der Förderkanalwandung bilden und deren Außen- bzw. Oberfläche mit der Fläche der übrigen Innenseite bzw. -fläche der Förderkanalwandung fluchtet. Hiernach sind die Einlassöffnungen zur Aufnahme von gasförmigem Fluid zwischen Abschnitten der Förderkanalwandung angeordnet, welche sich in Transportrichtung erstrecken und mit der übrigen Innenseite der Förderkanalwandung fluchten, wodurch sie für eine gute und reibungslose Führung der Objekte ohne störende Kanten sorgen.

Bei einer Weiterbildung sind Sensormittel, die ausgebildet sind, die Anwesenheit und Abwesenheit und/oder die Bewegungsgeschwindigkeit der Objekte zu erfassen, im Wirkbereich der Fluidabführungseinrichtung vorgesehen. Die Sensormittel sind bevorzugt Teil eines Regelungssystems zur Regelung der Fördergeschwindigkeit der Objekte durch Einstellung des Druckes des über die Fluidzuführungseinrichtung zugeführten gasförmigen Fluides. Dabei hat die Anordnung im Bereich der Fluidabführungseinrichtung den Vorteil, dass durch das dort aus dem Förderkanal wieder austretende gasförmige Fluid eventueller Schmutz von den Sensormitteln weggeblasen und auf diese einfache und zugleich geschickte Weise die Sensormittel gereinigt oder sogar von vornherein eventuelle Verschmutzungen der Sensormittel vermieden werden. Bei einer Weiterbildung weisen die Sensormittel mindestens eine Gruppe mit einem Sender zur Abgabe von elektromagnetischen Wellen wie beispielsweise Licht und einem Empfänger zur Aufnahme der elektromagnetischen Wellen auf.

Der Winkel zur Transportrichtung sollte vorzugsweise kleiner als 50° und bevorzugt nicht größer als 45° sein. Bevorzugt sollte das mindestens eine Fluidauslassmittel der Fluidzuführungseinrichtung unter einem Winkel von 30° bis 40°, vorzugsweise etwa 35°, zur Transportrichtung in die Innenseite der Förderkanalwandung münden. Das mindestens eine Fluideinlassmittel der Fluidabführungseinrichtung sollte bevorzugt unter einem Winkel von 40° bis 50°, vorzugsweise etwa 45°, zur Transportrichtung angeordnet sein.

Vorzugsweise weist der Förderkanal über seine im Wesentlichen gesamte Länge zwischen Förderkanaleinlass und Förderkanalauslass einen im Wesentlichen konstanten Querschnitt auf, was ebenfalls zu einem reibungslosen Transport der hier in Rede stehenden diskreten Objekte in vorteilhafter Weise beitragen kann.

Schließlich weist bevorzugt der Förderkanal einen runden, vorzugsweise kreisförmigen, Querschnitt auf.

Gemäß einem weiteren Aspekt der Erfindung wird vorgeschlagen eine Fördervorrichtung zum Transport von für die Herstellung von Produkten der Tabak verarbeitenden Industrie zu verwendenden und einen im Wesentlichen druckunempfindlichen Körper aufweisenden diskreten Objekten, mit einer Förderstrecke, die zum Transport der Objekte in Transportrichtung von einer ersten Station zu einer zweiten Station ausgebildet ist, mit mindestens einer in der Förderstrecke vorgesehenen Förderdüse mit der zuvor beschriebenen erfindungsgemäßen Konstruktion, mit einer der mindestens einen Förderdüse zugeordnete Fluidsteuerungseinheit, die zur Einstellung der Menge und/oder des Druckes des durch die Fluidzuführungseinrichtung in den Förderkanal der Förderdüse zugeführten Fluids ausgebildet ist, mit mindestens einem Sensor, der in einem Abschnitt der Förderstrecke stromabwärts von der mindestens einen Förderdüse angeordnet und ausgebildet ist, die Anwesenheit und Abwesenheit und/oder die Bewegungsgeschwindigkeit der Objekte zu erfassen, und mit einer Steuerungs- und Regelungseinheit, an die die Fluidsteuerungseinheit und der mindestens eine Sensor angeschlossen sind, wobei die Steuerungs- und Regelungseinheit ausgebildet ist, die Menge und/oder den Druck des Fluides in der mindestens einen Förderdüse zu erhöhen, wenn aufgrund des Messergebnisses durch den mindestens einen Sensor ein über einem bestimmten Wert liegender Abstand zwischen zwei aufeinanderfolgenden Objekten oder eine längere Abwesenheit von Objekten ermittelt wird, und zu reduzieren, wenn ein unter einem bestimmten Wert liegender Abstand zwischen zwei aufeinanderfolgenden Objekten oder ein Stau der Objekte ermittelt wird.

Nachfolgend werden bevorzugte Ausführungsbeispiele der Erfindung anhand der beiliegenden Zeichnungen näher erläutert. Es zeigen:
- Fig. 1: in perspektivischer Seitenansicht eine Förderdüse gemäß einem ersten bevorzugten Ausführungsbeispiel der Erfindung;
- Fig. 2: einen Längsschnitt durch die Förderdüse von Fig. 1;
- Fig. 3: einen gegenüber der Ansicht von Fig. 2 um 90° versetzten Längsschnitt durch die Förderdüse von Fig. 1;
- Fig. 4: in perspektivischer Ansicht eine Förderdüse gemäß einem zweiten bevorzugten Ausführungsbeispiel der Erfindung;
- Fig. 5: einen Längsschnitt durch die Förderdüse von Fig. 4; und
- Fig. 6: schematisch als Blockschaltbild eine Fördervorrichtung zwischen zwei Stationen unter Verwendung zweier Förderdüsen.

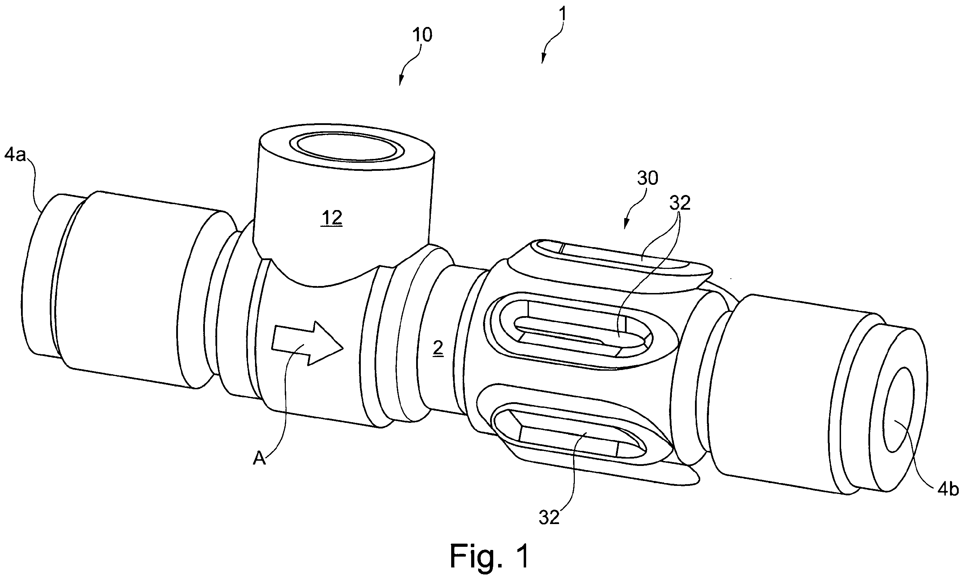

Die Figuren 1 bis 3 zeigen eine erste bevorzugte Ausführung einer Förderdüse 1, die mit all ihren Bestandteilen aus einem einstückigen Körper bzw. Gehäuse 2 besteht, der bzw. das durch einen dreidimensionalen Druckvorgang hergestellt werden kann.

Wie die Figuren erkennen lassen, hat der Körper bzw. das Gehäuse 2 eine längliche Form, die durch die Ausbildung eines Förderkanals 4 im Inneren bedingt ist. Der Förderkanal 4 weist einen Förderkanaleinlass 4a und einen Förderkanalauslass 4b auf und ist zum Transport von nicht dargestellten Objekten in Transportrichtung A vom Förderkanaleinlass 4a zum Förderkanalauslass 4b ausgebildet. Bei den zu transportierenden Objekten handelt es sich um diskrete Objekte, die für die Herstellung von Produkten der Tabak verarbeitenden Industrie verwendet werden. In der Regel sind derartige diskrete Objekte relativ kurz und besitzen also eine geringe Länge im Verhältnis zu ihrer Breite, wie es beispielsweise bei Wasserkapseln für den sog. "Splash"-Multifilter für Zigaretten der Fall ist.

Der Körper bzw. das Gehäuse 2 weist eine Förderkanalwandung 6 auf, deren Innenseite 6a den Förderkanal 4 über seine gesamte Länge begrenzt. Wie die Figuren ferner erkennen lassen, ist die Innenseite 6a der Förderkanalwandung 6 kontinuierlich durchlaufend und ohne jegliche Unstetigkeitsstellen ausgebildet und weist der Förderkanal 4 über seine gesamte Länge zwischen Förderkanaleinlass 4a und Förderkanalauslass 4b einen konstanten Querschnitt auf. Im dargestellten Ausführungsbeispiel, wie insbesondere Fig. 1 erkennen lässt, hat der Förderkanal 4 einen kreisförmigen Querschnitt und somit eine Zylinderform. Natürlich können durch den Förderkanal 4 nur Objekte transportiert werden, deren Außengeometrie zumindest etwas kleiner als der Querschnitt des Förderkanals 4 ist; des Weiteren sollte für eine sichere Führung der zu transportierenden Objekte deren Länge größer als deren Breite oder Außendurchmesser sein.

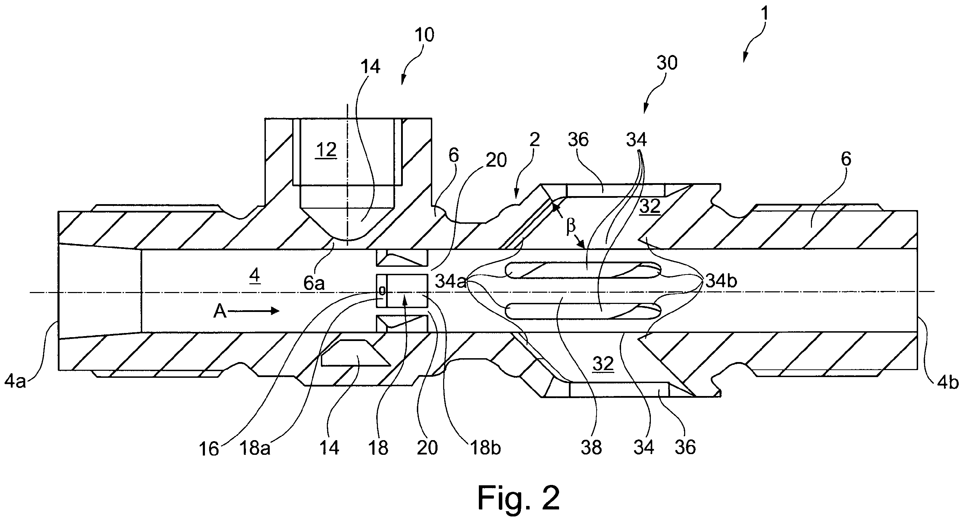

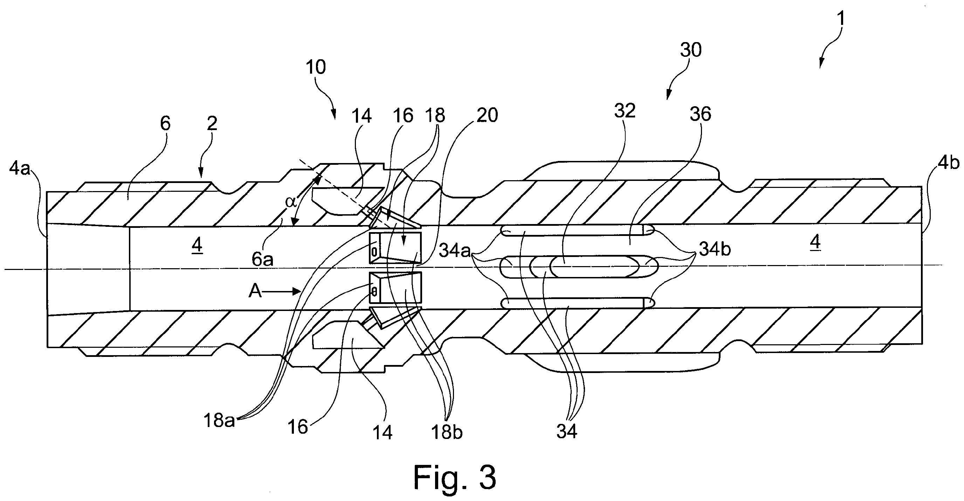

Da die beschriebene Förderdüse 1 mit Druckluft arbeitet, mit der die Objekte für den Transport im Förderkanal 4 beaufschlagt werden, weist die Förderdüse 1 eine Druckluftzuführungseinrichtung 10 auf, die einstückig am Körper bzw. Gehäuse 2 ausgebildet ist. Die Druckluftzuführungseinrichtung 10 weist einen Druckluftanschluss 12 auf, an den eine in den Figuren nicht dargestellte externe Druckluftquelle anschließbar ist. Ferner weist die Druckluftzuführungseinrichtung 10 eine Druckluftkammer 14 auf, die in der Förderkanalwandung 6 ausgebildet ist und den Förderkanal 4 umgibt, wie die Figuren 2 und 3 erkennen lassen. Ebenfalls lässt sich diesen Figuren entnehmen, dass die Druckluftzuführungseinrichtung 10 des Weiteren mehrere um den Förderkanal 4 herum verteilt vorgesehene Anordnungen aus einem Kanal 16 und einem Öffnungsbereich 18 aufweist, wobei diese Anordnungen auch als Fluidauslassmittel bezeichnet werden können. Wie insbesondere Fig. 3 erkennen lässt, sind die Kanäle 16 mit ihrem stromaufwärts gelegenen Ende gemeinsam an die ringförmige Fluidkammer 14 angeschlossen, während sie mit ihrem anderen, stromabwärts gelegenen Ende in den zugehörigen Öffnungsbereich 18 münden. Die Öffnungsbereiche 18 bilden jeweils eine in der Innenseite 6a der Förderkanalwandung 6 ausgebildete Auslassöffnung. Die Öffnungsbereiche 18 sind über den Umfang des Förderkanals 6 verteilt angeordnet, sodass die von ihnen gebildeten Auslassöffnungen entsprechend über den Umfang des Förderkanals 4 verteilt und somit quer zur Transportrichtung gemäß Pfeil A nebeneinanderliegen. Wie die Figuren 2 und 3 erkennen lassen, sind die Auslassöffnungen der Öffnungsbereiche 18 durch sich in Transportrichtung A erstreckende stegartige Abschnitte 20 voneinander getrennt, welche jeweils einen Bestandteil der Förderkanalwandung 6 bilden und deren Außen- bzw. Oberfläche mit der Fläche der übrigen Innenseite 6a der Förderkanalwandung 6 fluchten.

Wie insbesondere Fig. 3 erkennen lässt, sind die Kanäle 16 in einem Winkel α von etwa 35° gegenüber der Innenseite 6a der Förderkanalwandung 6 und somit gegenüber der Transportrichtung A bzw. der Längserstreckung des Förderkanals 4 schräg geneigt angeordnet und dabei mit ihrem stromabwärts gelegenen Ende in Richtung des Förderkanalauslasses 4b orientiert. Die von der nicht dargestellten externen Druckluftquelle bereitgestellte Druckluft wird somit durch den Druckluftanschluss 12 und die Druckluftkammer 14 in die Kanäle 16 gedrückt, aus denen sie in einer entsprechend dem Winkel α geneigten Orientierung in Richtung des Förderkanalauslasses 4b in den Förderkanal 4 austreten. Durch die verteilte Anordnung der Kanäle 16 und der zugehörigen Öffnungsbereiche 18 um den Förderkanal 4 herum wird demnach die Druckluft in einer entsprechend verteilten Anordnung um den Förderkanal 4 herum in den Förderkanal 4 geblasen, indem sie eine Art Drucklufthülle bildet, wodurch in vorteilhafter Weise eine gleichmäßige Beaufschlagung der zu transportierenden Objekte erzielt wird.

Wie die Figuren 2 und 3 des Weiteren erkennen lassen, weisen die Öffnungsbereiche 18 jeweils einen stromaufwärts gelegenen, zum Förderkanaleinlass 4a weisenden ersten Randabschnitt 18a und einen vom ersten Randabschnitt 18a stromabwärts gelegenen, zum Förderkanalauslass 4b weisenden zweiten Randabschnitt 18b auf, wobei diese beiden ersten und zweiten Randabschnitte 18a, 18b des Öffnungsbereiches 18 quer zur Transportrichtung A orientiert sind. Um die Bildung von Störkanten zu verhindern, sind diese beiden ersten und zweiten Randabschnitte 18a, 18b des Öffnungsbereiches 18 nach Art einer Fase ausgebildet, indem sie schräg geneigt zur Innenseite 6a der Förderkanalwandung 6 und somit zur Transportrichtung A bzw. zur Längserstreckung des Förderkanals 6 angeordnet sind, wobei der erste Randabschnitt 18a in Richtung des Förderkanaleinlasses 4a geneigt orientiert und der zweite Randabschnitt 18b in Richtung des Förderkanalauslasses 4b geneigt orientiert ist.

Da durch die durch die Druckluftzuführungseinrichtung 10 in den Förderkanal 4 eingebrachte Druckluft dort ein gewisser Druck entsteht, kommt dem Förderkanaleinlass 4a die Eigenschaft einer Saugseite und dem Förderkanalauslass 4b die Eigenschaft einer Druckseite zu.

Im dargestellten Ausführungsbeispiel ist stromabwärts von der Druckluftzuführungseinrichtung 10 eine Luftauslasseinrichtung 30 vorgesehen, um Luft aus dem Förderkanal 4 wieder abzuführen. Somit ist es möglich, eine nicht unerhebliche Menge der in den Förderkanal 4 eingebrachten Druckluft im Wesentlichen unmittelbar nach Eintritt durch die Druckluftzuführungseinrichtung 10 wieder aus dem Förderkanal 4 auszuschleusen. Dadurch können die zu transportierenden Objekte am Ende einer stromabwärts von der Förderdüse 1 vorgesehenen Förderstrecke bei Bedarf problemlos aufgestaut werden, da dann dort ein höherer Luftdruck nicht mehr vorhanden und eine Abfuhr der Luft nichtt mehr vonnöten ist; denn dies wird dann bereits durch die Luftauslasseinrichtung 30 in der Förderdüse 1 übernommen.

Die Luftauslasseinrichtung 30 weist im dargestellten Ausführungsbeispiel mehrere in Transportrichtung A längliche Kanäle 32 auf, die in der Förderkanalwandung 6 ausgebildet und um den Förderkanal 4 verteilt herum angeordnet sind. Die Kanäle 32 kommunizieren über eine jeweils zugeordnete Einlassöffnung 34 mit dem Förderkanal 4. Im dargestellten Ausführungsbeispiel sind die Einlassöffnungen 34 länglich bzw. schlitzförmig ausgebildet und erstrecken sich in Transportrichtung A. Die Anordnung aus Kanal 32 und zugehöriger Einlassöffnung 34 kann auch als Fluideinlassmittel bezeichnet werden. Wegen der verteilten Anordnung der Kanäle 32 in Umfangsrichtung um den Förderkanal 4 herum liegen auch die Einlassöffnungen 34 quer zur Transportrichtung A nebeneinander, wobei sie durch sich in Transportrichtung A erstreckende, stegartige Abschnitte 36 voneinander getrennt sind, welche jeweils einen Bestandteil der Förderkanalwandung 6 bilden und deren Außen- bzw. Oberfläche mit der Fläche der übrigen Innenseite der Förderkanalwandung 6 fluchtet. Die zur Innenseite 6a der Förderkanalwandung 6 fluchtenden stegförmigen Abschnitte 36 zwischen den Einlassöffnungen 34 sorgen für eine gute und reibungslose Führung der zu transportierenden Objekte ohne störende Kanten.

Ähnlich wie die Öffnungsbereiche 18 der Druckluftzuführungseinrichtung 10 sind auch die vorderen und hinteren Abschnitte der Einlassöffnungen 34 der Luftauslasseinrichtung 30 entsprechend angefast, um die Bildung von Störkanten im Förderkanal 4 zu verhindern. Hiernach weisen die Einlassöffnungen 34 einen stromaufwärts gelegenen, zum Förderkanaleinlass 4a weisenden ersten Rand- bzw. Endabschnitt 34a und einen vom ersten Endabschnitt 34a stromabwärts gelegenen, in Richtung auf den Förderkanalauslass 4b weisenden zweiten Rand- bzw. Endabschnitt 34b auf. Dabei ist der erste Randabschnitt 34a nach Art einer Fase schräg geneigt gegenüber der Innenseite 6a der Förderkanalwandung 6 und somit gegenüber der Transportrichtung A bzw. der Längserstreckung des Förderkanals 6 angeordnet und in Richtung des Förderkanaleinlasses 4a orientiert, während der zweite Endabschnitt 34b in anderer Richtung angefast ist, indem er zwar ebenfalls schräg geneigt gegenüber der Innenseite 6a der Förderkanalwandung 6 und somit der Transportrichtung A bzw. der Längserstreckung des Förderkanals 4 angeordnet, jedoch in Richtung auf den Förderkanalauslass 4b orientiert ist.

Im dargestellten Ausführungsbeispiel entspricht im Übrigen der Abstand zwischen dem stromabwärtigen Ende des zweiten Randabschnittes 18b der Öffnungsbereiche 18 und dem stromaufwärtigen Ende des ersten Endabschnittes 34a der Einlassöffnungen 34 etwa der Breite des Förderkanals 4, wie die Figuren 2 und 3 erkennen lassen.

Wie bereits angesprochen, dient die Luftauslasseinrichtung 30 zum Abführen von Luft aus dem Förderkanal 4. Hierzu tritt die Luft durch die Einlassöffnungen 34 in die Kanäle 32 ein und durch Auslassöffnungen 36 an der Außenseite der Luftauslasseinrichtung 30 in die Umgebung aus.

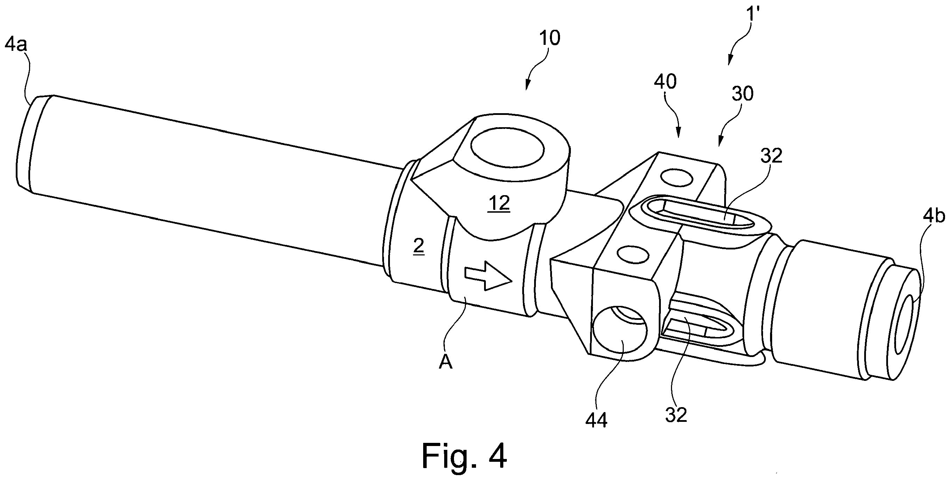

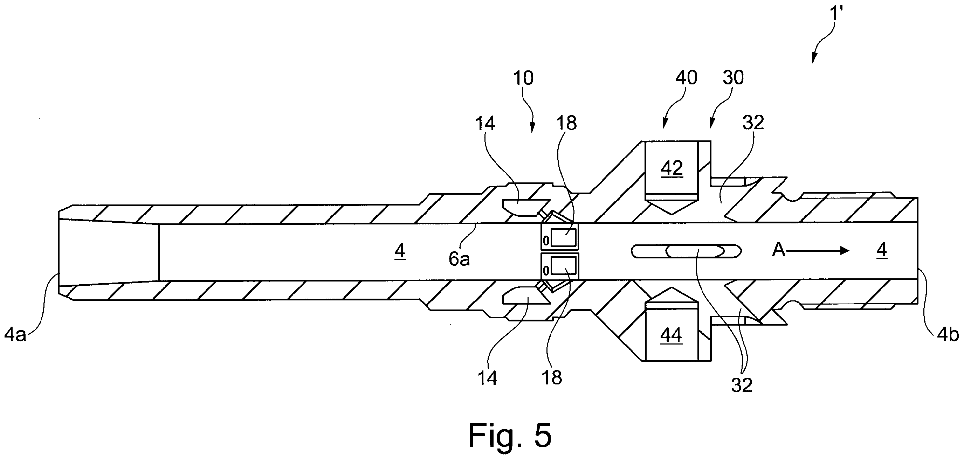

In den Figuren 4 und 5 ist eine zweite bevorzugte Ausführung einer Förderdüse 1' abgebildet, die sich von der Förderdüse 1 gemäß der in den Figuren 1 bis 3 dargestellten ersten Ausführung dadurch unterscheidet, dass zusätzlich noch eine Sensoranordnung 40 vorgesehen ist. Somit sind gegenüber der ersten Ausführung gemäß den Figuren 1 bis 3 gleiche Komponenten mit den gleichen Bezugszeichen bezeichnet, und diesbezüglich wird zur Vermeidung von Wiederholungen auf die zuvor getroffene Beschreibung verwiesen.

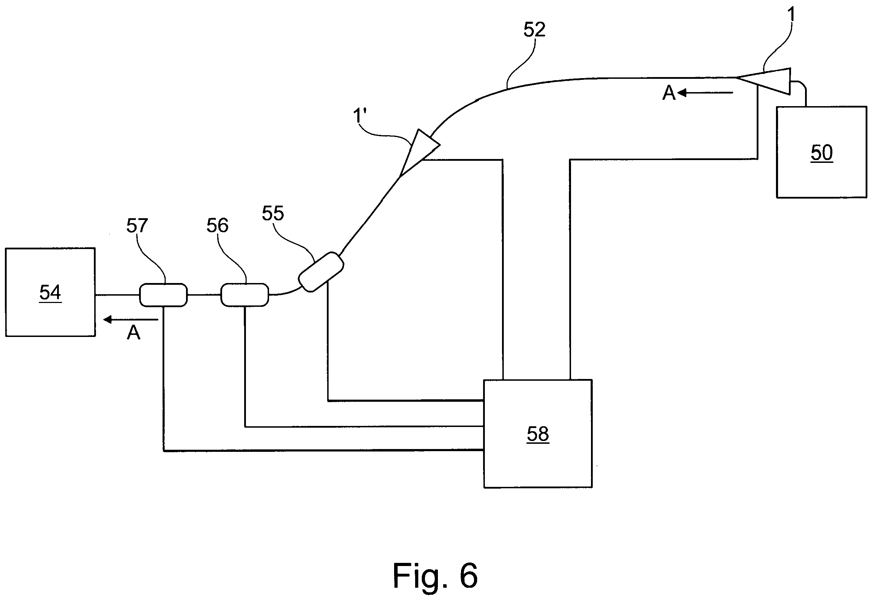

Wie bereits zuvor angesprochen, unterscheidet sich die Förderdüse 1' gemäß den Figuren 4 und 5 von der Förderdüse 1 gemäß den Figuren 1 bis 3 durch die zusätzliche Verwendung einer Sensoranordnung 40. Die Sensoranordnung 40 wird verwendet, um die Anwesenheit und Abwesenheit sowie die Bewegungsgeschwindigkeit der zu transportierenden Objekte durch den Förderkanal 4 zu erfassen, und ist bevorzugt Teil eines Regelungssystems zur Regelung der Fördergeschwindigkeit der Objekte durch Einstellung des Druckes der über die Druckluftzuführungseinrichtung 10 zugeführten Druckluft, was nachfolgend anhand von Fig. 6 noch ein wenig näher erläutert werden soll. Wie die Figuren 4 und 5 erkennen lassen, ist die Sensoranordnung 40 mit zwei in Bezug auf den Förderkanal 4 gegenüberliegenden Aussparungen 42, 44 versehen. Die erste Aussparung 42 dient zur Aufnahme eines in den Figuren nicht dargestellten Senders zur Abgabe von elektromagnetischen Wellen wie beispielsweise Licht und die zweite Aussparung 44 dient zur Aufnahme eines in den Figuren nicht dargestellten Empfängers zum Empfang der vom Sender übermittelten elektromagnetischen Wellen. Somit wird im dargestellten Ausführungsbeispiel ein Sensor von einer Gruppe mit einem Sender und einem Empfänger gebildet. Bevorzugt wird nach Art einer Lichtschranke ein optischer Sensor verwendet, dessen Sender eine Lichtquelle wie insbesondere eine Leuchtdiode bildet und dessen Empfänger einen Fotodetektor aufweist. Wie insbesondere Fig. 5 erkennen lässt, erstrecken sich die Aussparungen 42, 44 in die Kanäle 32 der Luftauslasseinrichtung 30. Eine solche Anordnung im Bereich der Luftauslasseinrichtung 30 hat den Vorteil, dass durch die dort aus dem Förderkanal 4 wieder austretende und durch die Kanäle 32 fließende Luft eventueller Schmutz von Sender und Empfänger und somit vom Sensor weggeblasen und auf diese einfache und zugleich geschickte Weise der Sensor gereinigt oder sogar von vornherein eventuelle Verschmutzungen des Sensors vermieden werden.

Figur 6 zeigt beispielhaft den Einsatz der Förderdüse gemäß den beiden zuvor beschriebenen Ausführungsbeispielen 1 und 1' in einer Fördervorrichtung, um diskrete Objekte von einer ersten Station 50 über eine Förderstrecke 52 zu einer zweiten Station 54 zu transportieren. Falls es sich bei den diskreten Objekten um Wasserkapseln für den sog. "Splash"-Multifilter handelt, wird die dargestellte Fördervorrichtung für den Transport von einer Vereinzelungsstation zu einer Filterherstellungsmaschine verwendet, so dass in diesem Fall die erste Station 50 für die Vereinzelungsstation und die zweite Station 54 für die Filterherstellungsmaschine steht. Damit sich die Objekte entlang der Förderstrecke 52 bewegen können, müssen diese am stromaufwärts gelegenen Anfang der Förderstrecke 52 entsprechend in Bewegung versetzt werden. Deshalb ist dort eine Förderdüse 1 gemäß dem zuvor anhand der Figuren 1 bis 3 beschriebenen ersten Ausführungsbeispiel vorgesehen, welche die aus der ersten Station 50 entnommenen Objekte mit Druckluft beaufschlagt, um diese dann für den Weg entlang der Förderstrecke 52 entsprechend zu beschleunigen. Wie Fig. 6 des Weiteren erkennen lässt, ist in dem gezeigten Ausführungsbeispiel einer Fördervorrichtung innerhalb der Förderstrecke 52 noch eine weitere Förderdüse vorgesehen, und zwar eine Förderdüse 1' gemäß dem zuvor anhand der Figuren 4 und 5 beschriebenen zweiten Ausführungsbeispiel, welche ja zusätzlich mit der Sensoranordnung 40 (vgl. Figuren 4 und 5) versehen ist. Im stromabwärts gelegenen Abschnitt der Förderstrecke 52 vor Erreichen der zweiten Station 54 sind im dargestellten Ausführungsbeispiel gemäß Fig. 6 drei Sensoren 55, 56, 57 vorgesehen. Die Förderdüsen 1, 1' und die Sensoren 55 bis 57 sind an eine Steuerungs- und Regelungseinheit 58 angeschlossen, die die Signale von der Sensoranordnung 40 der Förderdüse 1' und von den Sensoren 55 bis 57 empfängt und in Abhängigkeit dessen nicht dargestellte Druckluftquellen oder Druckluftsteuerungseinheiten für die Einleitung von Druckluft in die Förderdüsen 1 und 1' steuert.

In Abhängigkeit von den Signalen der Sensoranordnung 40 in der Förderdüse 1' steuert die Regelungseinheit 58 zumindest die in die Förderdüse 1 einzuleitende Druckluft. Erfasst die Sensoranordnung 40 in der Förderdüse 1' eine zu hohe Bewegungsgeschwindigkeit der Objekte, wird beispielsweise der Druck der Druckluft in der Förderdüse 1 verringert. Wird demgegenüber von der Sensoranordnung in der Förderdüse 1' eine zu geringe Bewegungsgeschwindigkeit der Objekte oder gar eine längere Abwesenheit der Objekte registriert, so wird die Druckluft in der Förderdüse 1 von der Regeleinheit 58 entsprechend erhöht.

Die Anordnung der drei Sensoren 55 bis 57 im unteren, stromabwärts gelegenen Abschnitt der Förderstrecke 52 kurz vor der zweiten Station 54 ist insbesondere dann erforderlich, wenn die zweite Station 54 eine batchweise Weiterverarbeitung der diskreten Objekte vornimmt, so dass in Abhängigkeit vom jeweiligen augenblicklichen Verfahrenszustand in der zweiten Station 54 der Umstand eintreten kann, dass sich die Objekte im unteren, stromabwärts befindlichen Abschnitt der Förderstrecke 52 vor der zweiten Station 54 zumindest temporär stauen können. Dieser Stau wird von den Sensoren 55 bis 57 erfasst, und in Abhängigkeit von entsprechenden Ausgangssignalen in den Sensoren 55 bis 57 nimmt dann die Regelungseinheit 58 den Druck der Druckluft zumindest in der Förderdüse 1' und je nach Betriebszustand auch in der Förderdüse 1 zurück, wodurch die Transportgeschwindigkeit der nachfolgenden Objekte verlangsamt und zugleich ein unerwünschter Anstieg des Luftdruckes in der Förderstrecke 52 vor der zweiten Station 54 verhindert wird. Wird demgegenüber mit Hilfe der Sensoren 55 bis 57 festgestellt, dass Objekte ausbleiben, so erhöht die Regelungseinheit 58 den Luftdruck in den Förderdüsen 1, 1'.

## Patentansprüche

1. Förderdüse zum Transport von für die Herstellung von Produkten der Tabak verarbeitenden Industrie zu verwendenden diskreten Objekten,
mit einem Förderkanal (4), der eine Förderkanalwandung (6), einen Förderkanaleinlass (4a) und einen Förderkanalauslass (4b) aufweist und zum Transport der Objekte in Transportrichtung (A) vom Förderkanaleinlass (4a) zum Förderkanalauslass (4b) ausgebildet ist, und
mit einer Fluidzuführungseinrichtung (10), die zum Zuführen von gasförmigem Fluid, insbesondere Luft, unter Druck in den Förderkanal (4) ausgebildet ist,
wobei die Förderkanalwandung (6) eine kontinuierlich durchlaufenden und keine Unstetigkeitsstellen enthaltende Innenseite (6a) aufweist, und
wobei die Fluidzuführungseinrichtung (10) mindestens ein Fluidauslassmittel (16, 18) aufweist, das zur Abgabe des Fluids in den Förderkanal (4) ausgebildet, unter einem Winkel (α) von kleiner als 90° zur Transportrichtung (A) in der Förderkanalwandung (6) angeordnet und dabei in Richtung des Förderkanalauslasses (4b) orientiert ist.

2. Förderdüse nach Anspruch 1, bei welcher das mindestens eine Fluidauslassmittel (16, 18) der Fluidzuführungseinrichtung (10) einen Kanal (16) und einen Öffnungsbereich (18) aufweist, der mit dem Kanal (16) verbunden ist und eine in der Innenseite (6a) der Förderkanalwandung (6) ausgebildete Auslassöffnung aufweist.

3. Förderdüse nach Anspruch 2, bei welcher die Auslassöffnung einen stromaufwärts gelegenen, zum Förderkanaleinlass (4a) weisenden ersten Randabschnitt (18a), der nach Art einer Fase unter einem Winkel von kleiner als 90° zur Transportrichtung (A) angeordnet und in Richtung des Förderkanaleinlasses (4a) orientiert ist, und einen vom ersten Randabschnitt (18a) stromabwärts gelegenen, zum Förderkanalauslass (4b) weisenden zweiten Randabschnitt (18b) aufweist, der nach Art einer Fase unter einem Winkel von kleiner als 90° zur Transportrichtung (A) angeordnet und dabei in Richtung des Förderkanalauslasses (4b) orientiert ist.

4. Förderdüse nach Anspruch 2 oder 3, bei welcher die Breite des Öffnungsbereiches (18) größer als die Breite des Kanals (4) ist.

5. Förderdüse nach mindestens einem der vorangegangenen Ansprüche, bei welcher die Fluidzuführungseinrichtung (10) einen Fluidanschluss (12), eine mit dem Fluidanschluss (12) verbundene Fluidkammer (14), der den Förderkanal (4) an oder in der Förderkanalwandung (6) im Wesentlichen umgibt, und mehrere Fluidauslassmittel (16, 18) aufweist, die um den Förderkanal (6) herum verteilt angeordnet und gemeinsam mit der Fluidkammer (14) verbunden sind.

6. Förderdüse nach den Ansprüchen 2 und 5, bei welcher die Auslassöffnungen quer zur Transportrichtung (A) nebeneinanderliegen und durch sich in Transportrichtung (A) erstreckende, vorzugsweise stegartige, Abschnitte (20) voneinander getrennt sind, welche jeweils einen Bestandteil der Förderkanalwandung (6) bilden und deren Oberfläche mit der Fläche der übrigen Innenseite (6a) der Förderkanalwandung (6) fluchtet.

7. Förderdüse nach mindestens einem der vorangegangenen Ansprüche, mit einer Fluidabführungseinrichtung (30), die zum Abführen von gasförmigem Fluid, insbesondere Luft, aus dem Förderkanal (4) ausgebildet ist und mindestens ein Fluideinlassmittel (32, 34) aufweist, das zur Aufnahme von Fluid aus dem Förderkanal (4) ausgebildet, in der Förderkanalwandung (6) unter einem Winkel (β) von kleiner als 90° zur Transportrichtung (A) angeordnet und in Richtung des Förderkanaleinlasses (4a) orientiert ist.

8. Förderdüse nach Anspruch 7, bei welcher der Abstand zwischen den Fluideinlassmitteln (32, 34) der Fluidabführungseinrichtung (30) und den Fluidauslassmitteln (16, 18) der Fluidzuführungseinrichtung (10) etwa der Breite des Förderkanals (4) entspricht.

9. Förderdüse nach Anspruch 7 oder 8, bei welcher das mindestens eine Fluideinlassmittel (32, 34) der Fluidabführungseinrichtung (30) einen Kanal (32) mit einer in der Innenseite (6a) der Förderkanalwandung (6) ausgebildeten Einlassöffnung (34) aufweist.

10. Förderdüse nach Anspruch 9, bei welcher die Einlassöffnung (34) einen stromaufwärts gelegenen, zum Förderkanaleinlass (4a) weisenden ersten Randabschnitt (34a), der nach Art einer Fase unter einem Winkel von kleiner als 90° zur Transportrichtung (A) angeordnet und in Richtung des Förderkanaleinlasses (4a) orientiert ist, und einen vom ersten Randabschnitt (34a) stromabwärts gelegenen, in Richtung auf den Förderkanalauslass (4b) weisenden zweiten Randabschnitt (34b) aufweist, der nach Art einer Fase unter einem Winkel von kleiner als 90° zur Transportrichtung (A) angeordnet und dabei in Richtung des Förderkanalauslasses (4b) orientiert ist.

11. Förderdüse nach mindestens einem der Ansprüche 7 bis 10, bei welcher die Fluidabführungseinrichtung (30) mehrere Fluideinlassmittel (32, 34) aufweist, die an oder in der Förderkanalwandung (6) um den Förderkanal (4) herum angeordnet sind.

12. Förderdüse nach Anspruch 11, bei welcher die Einlassöffnungen (34) quer zur Transportrichtung (A) nebeneinanderliegen und durch sich in Transportrichtung (A) erstreckende, vorzugsweise stegartige, Abschnitte (36) voneinander getrennt sind, welche jeweils einen Bestandteil der Förderkanalwandung (6) bilden und deren Oberfläche mit der Fläche der übrigen Innenseite (6a) der Förderkanalwandung (6) fluchtet.

13. Förderdüse nach mindestens einem der Ansprüche 7 bis 12, bei welcher Sensormittel (40), die ausgebildet sind, die Anwesenheit und Abwesenheit und/oder die Bewegungsgeschwindigkeit der Objekte zu erfassen, im Wirkbereich der Fluidabführungseinrichtung (30) vorgesehen sind.

14. Förderdüse nach Anspruch 13, bei welcher die Sensormittel (40) mindestens eine Gruppe mit einem Sender zur Abgabe von elektromagnetischen Wellen und einem Empfänger zur Aufnahme der elektromagnetischen Wellen aufweisen.

15. Förderdüse nach mindestens einem der vorangegangenen Ansprüche, bei welcher der Winkel kleiner als 50° und bevorzugt nicht größer als 45° ist.

16. Förderdüse nach Anspruch 15, bei welcher das mindestens eine Fluidauslassmittel (16, 18) unter einem Winkel (α) von 30° bis 40°, vorzugsweise etwa 35°, zur Transportrichtung (A) in die Innenseite (6a) der Förderkanalwandung (6) mündet.

17. Förderdüse nach den Ansprüchen 7 und 15, bei welcher das mindestens eine Fluideinlassmittel (34) unter einem Winkel (β) von 40° bis 50°, vorzugsweise etwa 45°, zur Transportrichtung (A) angeordnet ist.

18. Förderdüse nach mindestens einem der vorangegangen Ansprüche, bei welcher der Förderkanal (4) über im Wesentlichen seine gesamte Länge zwischen Förderkanaleinlass (4a) und Förderkanalauslass (4b) einen im Wesentlichen konstanten Querschnitt aufweist.

19. Förderdüse nach mindestens einem der vorangegangenen Ansprüche, bei welcher der Förderkanal (4) einen runden, vorzugsweise kreisförmigen, Querschnitt aufweist.

20. Fördervorrichtung zum Transport von für die Herstellung von Produkten der Tabak verarbeitenden Industrie zu verwendenden und einen im Wesentlichen druckunempfindlichen Körper aufweisenden diskreten Objekten,
mit einer Förderstrecke (52), die zum Transport der Objekte in Transportrichtung (A) von einer ersten Station (50) zu einer zweiten Station (54) ausgebildet ist,
mit mindestens einer in der Förderstrecke (52) vorgesehenen Förderdüse (1; 1') gemäß mindestens einem der vorangegangenen Ansprüche,
mit einer der mindestens einen Förderdüse (1; 1') zugeordneten Fluidsteuerungseinheit, die zur Einstellung der Menge und/oder des Druckes des durch die Fluidzuführungseinrichtung (10) in den Förderkanal (4) der Förderdüse (1; 1') zugeführten Fluids ausgebildet ist,
mit mindestens einem Sensor (55, 56, 57), der in einem Abschnitt der Förderstrecke (52) stromabwärts von der mindestens einen Förderdüse (1; 1') angeordnet und ausgebildet ist, die Anwesenheit und Abwesenheit und/oder die Bewegungsgeschwindigkeit der Objekte zu erfassen, und
mit einer Steuerungs- und Regelungseinheit (58), an die die Fluidsteuerungseinheit und der mindestens eine Sensor (55, 56, 57) angeschlossen sind,
wobei die Steuerungs- und Regelungseinheit (58) ausgebildet ist, die Menge und/oder den Druck des Fluides in der mindestens einen Förderdüse (1; 1') zu erhöhen, wenn aufgrund des Messergebnisses durch den mindestens einen Sensor (55, 56, 57) ein über einem bestimmten Wert liegender Abstand zwischen zwei aufeinanderfolgenden Objekten oder eine längere Abwesenheit von Objekten ermittelt wird, und zu reduzieren, wenn ein unter einem bestimmten Wert liegender Abstand zwischen zwei aufeinanderfolgenden Objekten oder ein Stau der Objekte ermittelt wird.
